(19)

Europäisches Patentamt
European Patent Office
Office européen des brevets

(11) **EP 4 500 394 B1**

(12) **EUROPEAN PATENT SPECIFICATION**

(45) Date of publication and mention
of the grant of the patent:
**15.07.2026 Bulletin 2026/29**

(21) Application number: **23719619.1**

(22) Date of filing: **31.03.2023**

(51) International Patent Classification (IPC):
**G06N 3/0455** (2023.01)    **G06N 3/084** (2023.01)
**G06N 3/0895** (2023.01)    **G06N 3/0442** (2023.01)
**B62D 53/00** (2006.01)

(52) Cooperative Patent Classification (CPC):
**G06N 3/0455; G06N 3/0442; G06N 3/084;
G06N 3/0895; G06Q 10/047; G08G 1/165;
G08G 1/166**

(86) International application number:
**PCT/US2023/065210**

(87) International publication number:
**WO 2023/192987 (05.10.2023 Gazette 2023/40)**

(54) **A LEARNING-BASED METHOD AND SYSTEM FOR PATH PLANNING OF AN AUTONOMOUS TRACTOR-TRAILER**

LERNBASIERTES VERFAHREN UND SYSTEM ZUR WEGPLANUNG EINES AUTONOMEN TRAKTORANHÄNGERS

PROCÉDÉ ET SYSTÈME BASÉS SUR L'APPRENTISSAGE POUR LA PLANIFICATION DE TRAJET D'UN SEMI-REMORQUE AUTONOME

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **31.03.2022 US 202263362261 P**

(43) Date of publication of application:
**05.02.2025 Bulletin 2025/06**

(73) Proprietor: **AUMOVIO Autonomous Mobility US, LLC**
**Auburn Hills, Michigan 48326 (US)**

(72) Inventor: **ZHANG, Xian**
**Auburn Hills, Michigan 48326 (US)**

(74) Representative: **Aumovio Corporation**
**AUMOVIO Germany GmbH**
**Taunusstraße 36**
**80807 München (DE)**

(56) References cited:
- **SUNG INKYUNG ET AL: "On the training of a neural network for online path planning with offline path planning algorithms",** INTERNATIONAL JOURNAL OF INFORMATION MANAGEMENT, ELSEVIER SCIENCE LTD, GB, vol. 57, 5 June 2020 (2020-06-05), XP086492083, ISSN: 0268-4012, [retrieved on 20200605], DOI: 10.1016/J.IJINFOMGT.2020.102142
- **LI PENG ET AL: "Human-like motion planning of autonomous vehicle based on probabilistic trajectory prediction",** APPLIED SOFT COMPUTING, ELSEVIER, AMSTERDAM, NL, vol. 118, 29 January 2022 (2022-01-29), XP086979460, ISSN: 1568-4946, [retrieved on 20220129], DOI: 10.1016/J.ASOC.2022.108499
- **CEN HANGJIE ET AL: "Optimization-based Maneuver Planning for a Tractor-Trailer Vehicle in Complex Environments using Safe Travel Corridors",** 2021 IEEE INTELLIGENT VEHICLES SYMPOSIUM (IV), IEEE, 11 July 2021 (2021-07-11), pages 974 - 979, XP034005990, DOI: 10.1109/IV48863.2021.9575439

**Description**

BACKGROUND

1. Field

The present application relates to a method and system for training a deep neural network to generate paths for tractor-trailer combinations to minimize or otherwise reduce off-track of the tractor and the swept area of the trailer.

2. Description of Related Art

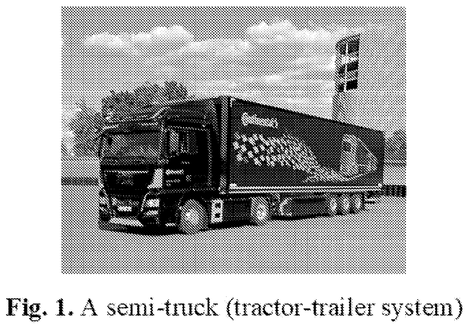

The trucking industry has been seen as the most promising for deploying autonomous driving technology. Articulated structures and larger dimensioned semi-trucks (tractor-trailer combinations) may lead to off-tracking (i.e., on-road driving) without proper planning. Current path/trajectory planners for normal or passenger vehicles do not consider exceedingly large dimensions and could result in infeasible trailer paths, while complex planners, e.g., those based on MPC algorithms, usually require large computational power, to meet the real-time requirements.
The article by Inkyung Sung et al.: "On the training of a neural network for online path planning with offline path planning algorithms", INTERNATIONAL JOURNAL OF INFORMATION MANAGEMENT, vol. 57, 5 June 2020, describes a method for motion planning for autonomous vehicles using neural network-based online path planning based on a training data set representing desired paths of an automated vehicle.
In the article by Peng Li et al.: "Human-like motion planning of autonomous vehicle based on probabilistic trajectory prediction", APPLIED SOFT COMPUTING, vol. 118, 29 January 2022, a method for determining an optimal path for the motion of an autonomous vehicle is disclosed, wherein a center line of a road lane is used as a reference.
The article by Hangjie Cen et al.: "Optimization-based Maneuver Planning for a Tractor-Trailer Vehicle in Complex Environments using Safe Travel Corridors", 2021 IEEE INTELLIGENT VEHICLES SYMPOSIUM (IV), IEEE, 11 July 2021, describes a method to determine a collision-free path for a tractor-trailer vehicle using an optimal control problem to model the vehicle and the trailer in an environment.
While the problems of perception, mapping and location, prediction are largely the same for the autonomous semi-trucks as for the autonomous passenger cars, with tractor-trailer combinations (see FIG. 1 for an example), new challenges do rise when planning the path / trajectory due to the articulated structures and large dimensions of the systems. Human drivers, when maneuvering these tractor trailer systems, tend to go to the outer side of the lane when making a turn, since the trailer tends to sweep the inner side of the turn. However, current path planners designed for normal autonomous cars do not consider these attached trailers, and if applied directly to autonomous semi-trucks, could lead to infeasible trailer paths that go off track, especially when making sharp turns. While numerical optimization approaches such as MPC-based path planning algorithms do exist, these complex planners usually require large computation resources to meet real-time requirements.

SUMMARY

The present invention is defined in the independent claims. Preferred embodiments are defined by the dependent claims. Further aspects and examples are provided for facilitating the understanding of the invention. Example embodiments are directed to a method and system for training a deep neural network to generate paths for tractor-trailer combinations to minimize or otherwise reduce off-track of the tractor and the swept area of the trailer.
According to an aspect of an embodiment of the present disclosure, there is provided a method of training a neural network that, at inference time, can relatively quickly generate a feasible path with the objective to minimize the off-track of the tractor and the trailer swept areas and avoid collisions with static obstacles. When a human driver plans such a low-level path or trajectory, there is not always a complex, meticulous calculation involved, for most cases, the plan is made rather quickly, out of the driver's past experiences, or intuition.
According to an aspect of an embodiment of the present application, there is provided an AI path planner having an encoder-decoder architecture that generates feasible paths for autonomous semi-trucks to minimize the off-track of the tractor and the trailer swept areas and at the same time avoid collisions with static obstacles.
According to an aspect of an embodiment of the present application, there is provided a path cost function that evaluates the "true" cost of a path in an absolute, objective sense and use it to guide the training of the AI path planner. This eliminates the need for expert driving data collection/augmentation and enables training on completely faked data.
According to an aspect of an embodiment of the present application, there is provided a method in which the corresponding trailer path is inferred from a given tractor path using the kinematic model of the tractor-trailer system, which plays a key role in constructing the path cost function.

[Path planning for tractor-trailer systems]

Literature in this area focused mainly on off-road, or unstructured driving of tractor-trailer systems. Classical motion planning approaches, which can be broadly grouped into three categories - graph search-based (e.g., hybrid A*), incremental sampling and searching (e.g., rapidly exploring random trees, or RRT), and optimization-based (e.g., model predictive control, or MPC) - are employed and extended to tackle this new problem with consideration of the size and the dynamics of the attached trailer.

For on-road, or structured driving of tractor-trailer systems, only a few papers exist in the literature investigating the path planning of the systems, all of which are optimization-based. In one paper, the path planning problem is formulated as a nonlinear Optimal Control Problem (OCP) with the control objective being minimizing the off-track of the vehicle bodies swept area and avoiding collision with obstacles. The OCP problem is then solved using a Sequential Quadratic Programming (SQP) approach.

[Motion planning with deep learning]

While the majority work applying deep learning techniques to autonomous driving problems focus on perception, recent years have seen more and more applications of deep learning to prediction and planning as well. Two of the most representative deep learning paradigms for motion planning are imitation learning and deep reinforcement learning.

With imitation learning, the idea is to replicate the driving behaviors of some driving experts, usually human drivers, via supervised learning. However, pure imitation is insufficient for handling complex driving scenarios even with huge amount of expert driving data, where in a prior proposed system, ChauffeurNet, a neural network that takes map and perceived environment information in the form of pixel images as input and outputs a planned trajectory at each time step. Rather than purely imitating all data, the authors synthesized the collected data in the form of perturbations to the expert's driving and augment the imitation loss with additional losses that penalize undesirable events, leading to robustness of the learned model and achieved improved performance.

In contrast, a deep reinforcement learning (DRL) based agent learns to drive a vehicle without any supervision, but by exploring a simulated environment with defined reward functions. A trained DRL agent does not explicitly plan a path or trajectory, rather, it learns a policy that maps a state to an action, executing which would yield a trajectory implicitly. The "action" can be a low-level action such as a steering wheel angle command, or a high-level action such as abstracted driving strategies. In Schwartz (2016), the authors decomposed their motion planner into a learned driving strategies planner and a trajectory planner with hard constraints that is not learned. The DRL was then applied to learn a policy that maps a state in the (agnostic) state space into a set of Desires, which basically represent high-level driving strategies. The goal of Desires is to enable comfort of driving, while hard constraints guarantee the safety of driving.

BRIEF DESCRIPTION OF THE DRAWINGS

The above and other aspects will be more clearly understood from the following brief description taken in conjunction with the accompanying drawings, in which:

FIG. 1 is a diagram of a conventional semi-truck and tractor-trailer system;
FIG. 2 is a diagram of input features and an output path of a network, according to an embodiment;
FIG. 3 is a diagram of an encoder-decoder architecture for an artificial intelligence (AI) path planner, according to an embodiment;
FIG. 4 is a diagram illustrating training pipelines, according to an embodiment;
FIG. 5 is a diagram illustrating a truck-trailer tricycle model, according to an embodiment;
FIG. 6 is a diagram illustrating data samples, according to an embodiment;
FIG. 7 is a diagram illustrating data set results, according to an embodiment;
FIG. 8 is a diagram illustrating a simulation scene, according to an embodiment;
FIGS. 9A and 9B are diagrams illustrating an encoder portion of a neural network and a decoder portion of a neural network, according to an embodiment; and
FIG. 10 is a block diagram of an autonomous driving system, according to an embodiment.

DETAILED DESCRIPTION

Example embodiments of the present disclosure are directed to a so-called "semi-supervised" learning approach for path planning of a tractor trailer system. A neural network is configured and trained which maps lane features and nearby static obstacles to a feasible path with the objective to minimize or otherwise reduce the off-track of the tractor and the trailer swept areas and avoid collisions with static obstacles. Vector form representations of the input and the output of the neural network and an encoder-decoder network architecture are described below. In addition, the training of the neural network utilizes a path cost function. The path cost function and the kinematic model of the tractor trailer system is provided in playing an important role in constructing the path cost function.

[Input output representation]

The input to the network, i.e., lane features and static obstacles, use intermediate and vector representation. As pointed out in earlier systems, using vector representation **avoids lossy** rendering and computationally intensive encoding steps; while using intermediate representation enhances the transferability of the model compared to using raw sensor data, meaning a model trained with intermediate representation in simulation to real scenarios expecting similar model performance may be more easily applied. Also, using vector and intermediate representation facilitates the fake data generation used for model training, as described below.

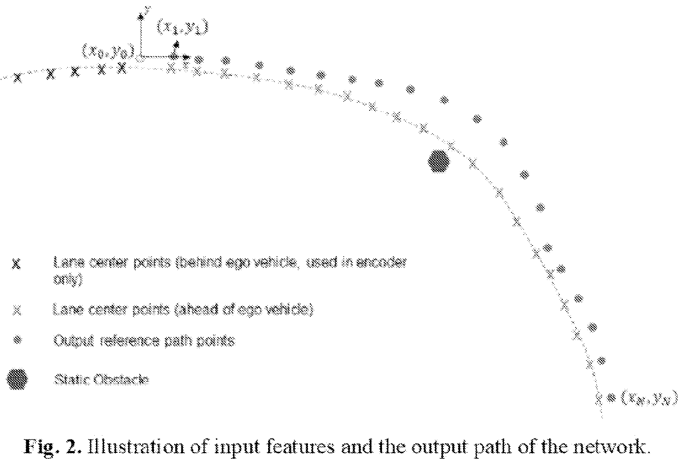

As depicted in FIG. 2, a series of waypoints (each point in x, y coordinate) are used to represent the target lane center, or the reference path the tractor-trailer is trying to follow (in colored rendition: black crosses are behind the current tractor rear axle center position, and cyan ahead); a six pointed hexagons is used to represent a static obstacle; and the output planned path is represented using a series of waypoints (circular dots). To avoid confusion, The input reference path or "anchor path," as each waypoint in the planned path corresponds to and is supposed to stay not too far from (and thus anchor) a waypoint in the input reference path (except for the first point of the planned path). The output planned path is for the tractor (as opposed to the trailer) and can be used as a reference path to a lower-level trajectory planner, which adds time or velocity information to the path.

Note that everything is in the tractor coordinate at current step, with the origin at the rear axle center of the tractor and the x-axis aligning with the tractor body heading. Therefore, the planned path would always start from the origin of the coordinate, i.e., $(x_0, y_0) = (0, 0)$.

[Model architecture]

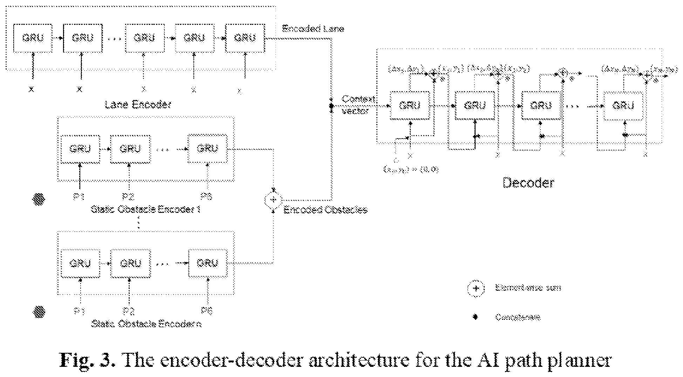

An encoder-decoder type of neural network is used as the path planner, with all the encoders and the decoder implemented using gated recurrent units (GRUs). For clarity, the GRU cells are unrolled in Fig 3. with corresponding inputs and outputs denoted. In the encoder case, each cell takes a point (either a waypoint or a vertex of an obstacle hexagon, in the form of x, y coordinates) as its input and produces a hidden state; in the case of the decoder, the input to a cell at each step is the concatenation of the output from the last step and the corresponding anchor waypoint at this step, while the output at this step is the sum of the GRU cell output and the anchor point at this step.

FIG. 3 illustrates a drawing of the encoder and a drawing of the decoder portions of the neural network.

For simplicity, all the static obstacle encodings are combined using the summation operation, the encoded obstacles are then concatenated with the encoded lane to form the context vector the decoder uses to generate the planned path. Other ways to combine the encodings from different encoders may also be used, e.g., graph neural network (GNN), Self-Attention mechanism.

[The semi-supervised approach]

Once the model is ready, the next problem is to train the model to generate a desired path that, if the tractor follows, yields minimal or otherwise reduced off-track of the tractor and the trailer swept areas and avoids collisions with static obstacles, while being smooth and feasible at the same time.

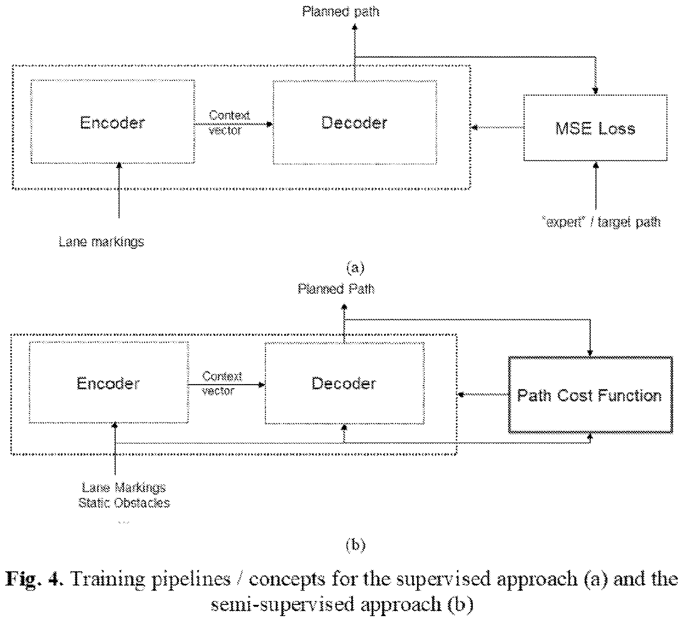

With expert driving data, it is straightforward to train the model in a supervised learning fashion, with the expert driven path as the target, and a function such as a mean squared error (MSE) as the loss function, which basically evaluates the point-to-point proximity between the network-generated path and the target path. Any discrepancy between the two path is calculated as the training loss and is backpropagated through the encoder-decoder network for the weight update. The training pipeline for the supervised approach is illustrated in FIG. 4(a).

The supervised approach is a pure imitation of the "expert" driving and while works for the simplest scenarios (i.e., without static obstacles), suffers from several drawbacks: 1) it requires collection of a large amount of data of "good" driving with enough "interesting" scenarios (turns of various curvatures); 2) it might learn the "random wandering" about the lane center, as human drivers never stay perfectly aligned with the lane center; 3) since the network learns from the expert, it can never hope to better the expert driving; and 4) it is extremely hard, if not impossible, to teach the network to avoid static obstacles using the supervised approach, as the training data needed for that purpose would require so many combinations of the lane shapes and different sizes and placements of static obstacles with respect to the lanes that it is impractical to collect from real vehicle tests.

To overcome these drawbacks and difficulties, the semi-supervised approach is utilized where the MSE kind of loss function (that requires a target path from expert driving and evaluates the discrepancy between the network output path the target path) is replaced with an absolute, "true" path cost function that evaluates the quality of a path without having to compare it to some expert path, but by applying a set of predefined criteria. The training pipeline for the semi-supervised approach is illustrated in FIG. 4(b).

The path cost function calculates a cost for each path based on its relationship with the anchor path (e.g., the deviation from the anchor path) and its own attributes (e.g., the path smoothness). The higher the cost, the "worse" the path: a path with 0 cost is a "perfect" path (in terms of the definition of the cost function). The path cost is then backpropagated through the neural network to guide the end-to-end training, updating the parameters of the encoders and the decoder in the direction that would minimize or otherwise reduce the cost. This, of course, requires a design of a differentiable path cost function, discussed below.

[Path cost function as the loss function]

The path cost function is configured with the following criteria of a "good" path in mind: a good path should be safe (collision free), rule-following (e.g., keeping in the lane), feasible and comfortable (smooth). Based on this set of criteria, the total cost of a path may be represented as a linear combination of several individual costs, as in the following equation, each corresponding to one criterion.

$$C_{total} = (w_{11} C_{tractor-dev} \\ + w_{12} C_{trailer-dev}) \\ + w_2 C_{yaw-acc} \\ + w_3 C_{collision} + w_4 C_{other} \tag{0}$$

Each individual cost is described in detail below.

[Path deviation cost]

The term $w_{11} C_{tractor-dev} + w_{12} C_{trailer-dev}$ consists of the path deviation cost. It penalizes the deviation of both the tractor path and the trailer path from the anchor path and corresponds to the rule-following criterion.

The deviation of a path from the anchor path is quantified using the mean squared lateral distances of all the points of that path to the anchor path. In the case of the tractor path, the deviation cost can be written as:

$$C_{tractor-dev}$$

$$= \frac{1}{N} \sum_{j=1}^{N} \left[ lat\_dist(\boldsymbol{x_j}, path_{anchor}) \right]^2 \tag{1}$$

Where x_j=(x_j,y_j) is the j-th point of the tractor path; the anchor path $path_{anchor}$ is piece-wise linear as we represent it with a series of waypoints; and lat_dist($\cdot,\cdot$) is a function that calculates the lateral distance of a point to a path.

Note the AI path planner plans a path for the tractor to follow, i.e., the network outputs only the tractor path. To evaluate the trailer path deviation from the anchor path, the trailer path is inferred from the output tractor path, which would require a kinematic model of the tractor-trailer system, which is described below.

[Tractor yaw acceleration cost]

The term $w_2 C_{yaw-acc}$ is the tractor yaw acceleration cost and enforces smoothness of the planned path. The term $C_{yaw-acc}$ can be computed as the mean squared yaw acceleration at all (tractor) path points:

$$C_{yaw-acc} = \frac{1}{N-1} \sum_{j=0}^{N-2} \left( \frac{\omega_{j+1} - \omega_j}{\Delta s_j} \right)^2 \qquad (2)$$

where $\Delta s_j$ is the delta distance between path point $j$ and $j+1$; $\omega_j$ is the tractor yaw rate at path point $j$ and is defined as $(\theta_{j+1} - \theta_j)\big/\Delta s_j$ ; the tractor yaw angle $\theta_j$ is in turn defined as $\theta_j = \arctan(\frac{y_{j+1} - y_j}{x_{j+1} - x_j})$

[Collision cost]

The term $w_3 C_{collision}$ is the collision cost that promotes collision avoidance of the tractor and the trailer bodies with static obstacles and corresponds to the safe criterion. With n static obstacles, $C_{collision}$ can be written as

$$C_{collision} = \frac{1}{n} \sum_{i=1}^{n} (C_{tractor,col}^{[i]} + C_{trailer,col}^{[i]}) \qquad (3)$$

where $C_{tractor,col}^{[i]}$ is the collision cost incurred by the i-th static obstacle with the tractor body ( $C_{tractor,col}^{[i]}$ the trailer), and is implemented as a penalty to small distance between an obstacle and the tractor path:

$$C_{tractor,col}^{[i]} = \max\{0, -k \cdot [\min_j(lat\_dist(P_j^{[i]}, path_{tractor})) - thresh]\} \qquad (4)$$

where $P_j^{[i]}$ is the j-th vertex point of the i-th static obstacle; k and *thresh* are tunable constants. Obstacle-to-path distance smaller than the threshold distance is penalized linearly with respect to the distance difference (obstacle-to-path distance minus *thresh*), while obstacle-to-path distance larger than the threshold distance is not penalized.

[Other costs]

In addition to the three main costs introduced before, some other costs are included (grouped in the $C_{other}$ term) for different purposes, namely initial yaw cost and anchor points approximation cost, which we only briefly mention here without going to details.

The initial yaw cost penalizes large yaw angle at the first point of the planned path and can be written as $\|\theta_0\|^2$. This cost enforces a (soft) constraint that the tractor path starts with 0 heading since we chose the tractor coordinate at the current time as our coordinate system (FIG. 2).

The anchor points approximation cost is equivalently a regularization term and is simply the mean squared error of the tractor path and the anchor path, or $mse(path_{tractor}, path_{anchor})$.

When implemented properly, all the individual costs are differentiable, thus the total cost can be backpropagated through the neural network for training. In addition to being used as the loss function in training time, the path cost function can also be used in execution time to evaluate the quality of a planned path to see if it's feasible.

[Tractor-Trailer Model and Trailer Path Inference]

An integral piece in constructing the path cost function is a kinematic model for the tractor-trailer system, as it enables the inference of the corresponding trailer path from a given tractor path.

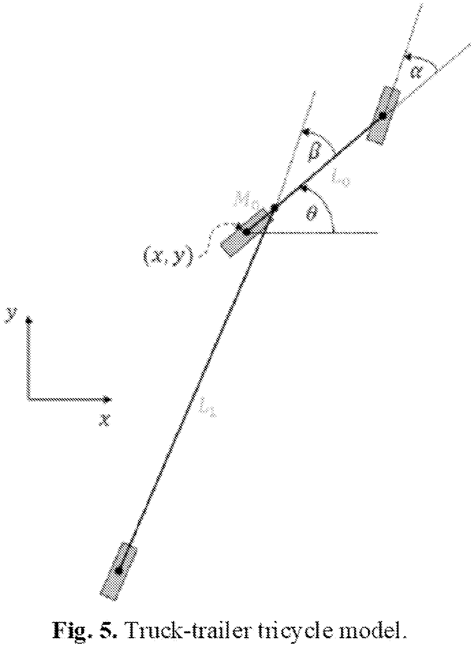

Similar to the idea of a bicycle model for two-axle vehicles, a tricycle model is used to represent the articulated structure of a truck and trailer system, as illustrated in FIG. 5.

In Fig 5., $\alpha$ is the steering angle of the front wheel of the tractor; (x, y) is the position of the rear axle center of the tractor; $\theta$ is the yaw angle of the tractor; $\beta$ is the trailer angle; L0 is the tractor wheelbase, L1 the trailer wheelbase; and $M_0$ is the distance from the trailer hinge point to the tractor rear axle.

The system dynamics of the tractor-trailer kinematic model is now presented with respect to s, the distance along the path, as we are interested in path instead of trajectory.

$$\begin{cases} dx/ds = \cos\theta \\ dy/ds = \sin\theta \\ d\theta/ds = \dfrac{\tan\alpha}{L_0} = u \\ d\beta/ds = -\dfrac{1}{L_1}\sin\beta + (\dfrac{M_0}{L_1}\cos\beta - 1)\dfrac{\tan\alpha}{L_0} \end{cases} \tag{5}$$

It is noted that, given a tractor path in form of a series of waypoints $(x_j,\ y_j)$, the (modified) control input $u = \dfrac{\tan\alpha}{L_0}$ may be calculated along the path, which can then be substituted into the trailer angle dynamics equation to calculate the trailer angle:

$$\beta_k = \beta_0 + \sum_{j=0}^{k-1}\left[-\frac{1}{L_1}\sin\beta_j + (\frac{M_0}{L_1}\cos\beta_j - 1)\frac{\tan\alpha_j}{L_0}\right] \cdot \Delta s_j \tag{6}$$

Once the trailer angles are obtained, the full trailer path may be computed.

[Tractor-Trailer Combination]

In FIG. 4(b), a neural network, forming at least part of a path planning module of an autonomous system for a trailer-tractor combination, has an encoder-decoder architecture and is illustrated in FIG. 4(b) by a dotted block having therein encoder and decoder network portions. The neural network receives, as input, data pertaining to, for example, roadway lane markings from the target lane and static obstacles disposed along the lane. The neural network input is provided to the encoder and decoder portions. The decoder portion of the neural network provides the neural network output corresponding to a reference path along the roadway lane. Example neural network models of the encoder/decoder architecture include recurrent neural networks, fully-connected neural networks, graphical neural networks, transformers, etc.

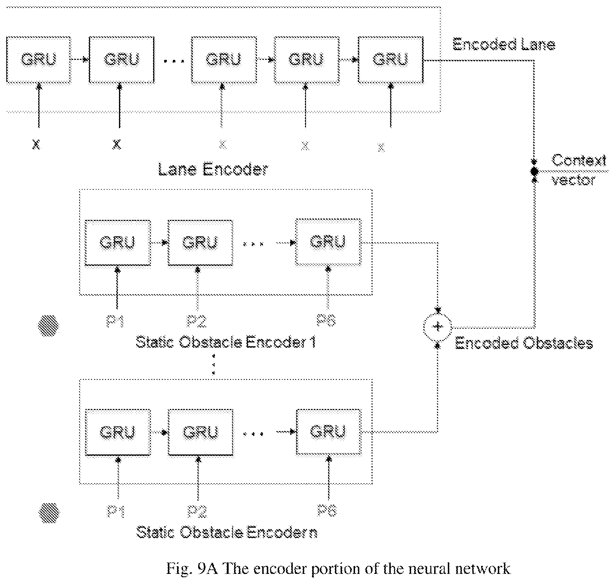

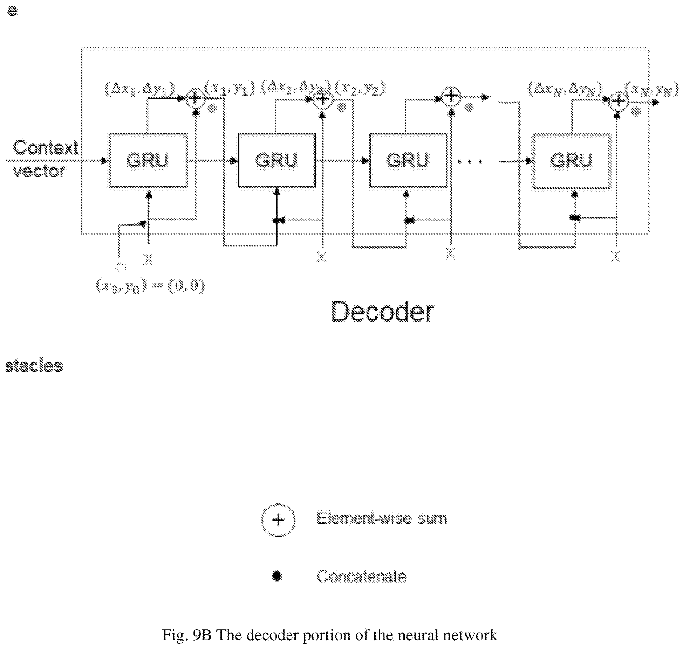

As mentioned, the encoder-decoder architecture of the neural network is, in accordance with an example embodiment, GRU-cell based. Figs. 3 and 9A-9B illustrate a GRU-based implementation of the encoder and decoder portions of the neural network according to an example embodiment.

The block titled "Path Cost Function" depicts the block used to train the neural network. The Path Cost Function block receives the neural network input as well as the neural network output and generates a path cost value which is backpropagated through the neural network and in particular updates the parameters of the encoders and the decoder in the direction that would minimize or otherwise reduce the cost. The path cost function block may be implemented in hardware, software or both hardware and software. As described above, the output of the path cost function block is based on a set of criteria including collision avoidance of the tractor and trailer with static obstacles, and path deviation for both the tractor and trailer relative to the reference (anchor) path.

Once the training phase of the path planning neural network is complete, the inference phase is performed in which the path cost function block is no longer utilized such that the neural network generates the reference (anchor) path based on the input data provided to the network.

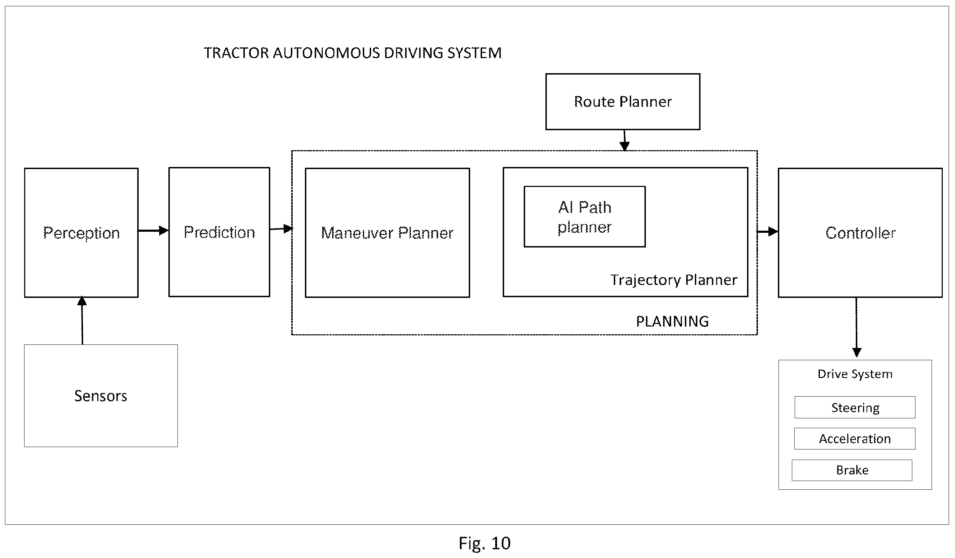

FIG. 10 is a block diagram of an autonomous drive system of the tractor in the tractor-trailer combination. Sensors mounted to, on or within the tractor-trailer combination, such as cameras, radar, Lidar, and/or ultrasonic sensors, provide sensor data to a perception module or algorithm which analyzes the sensor data. The perception module perceives and/or recognizes objects, moving and stationary, from the sensor data. The perception module identifies traffic participants (other vehicles, pedestrians, cyclists, etc.) from the perceived objects and provides the perceived objects to a prediction module or algorithm. The prediction module predicts future trajectories of the perceived traffic participants and provides the predicted trajectories of the traffic participants to a planning block.

The planning block includes a maneuver planner module or algorithm which determines, based upon the global route provided by a route planner block and the predicted trajectories of the perceived traffic participants, the particular lane of a roadway in which the tractor-trailer combination is to travel. The output of the maneuver planner module is provided to a trajectory planner block. The AI path planner, which corresponds to the neural network described above, forms part of the trajectory planner block and receives the output of the maneuver planner module. As described above, the input to the neural network includes lane information and any static obstacles associated with the determined lane in which the tractor-trailer combination is to travel. The output of the AI path planner (neural network) is the reference (anchor) path. Because the reference path is a static path, the reference path output of the AI path planner is used by the trajectory planner block to include or add motion (velocity) information of the tractor-trailer combination to provide a reference trajectory (i.e., path with velocity information). The reference trajectory is provided by the trajectory planner block to a controller of the tractor-trailer combination which uses the reference trajectory for sending instructions to the tractor-trailer combination's drive system (e.g., the steering system, brake system and the acceleration system) for moving the tractor-trailer combination along the determined lane of the roadway. The controller may be a microcontroller and/or include one or more (core) processors which, when executing program code instructions stored in memory associated with the controller, causes the controller to perform the operations discussed herein. The modules/algorithms discussed above may be implemented in program code having instructions that may be executed by a controller of the tractor autonomous driving system, such as a controller not shown in FIG. 10.

No data collection is needed for training the neural network. The neural network is shown with millions of possible combinations of lane shapes and obstacles arrangements, which are randomly generated/sampled from a predefined distribution relevant to reality.

The path cost function (or network that is trained otherwise with supervised learning) is constructed to score or penalize each neural network generated path based on its deviation from the lane center, the path smoothness and collision with any obstacles.

The training phase of the path planning neural network is trained to minimize or redue the cost of the generated paths.

[Results]

Described below is how the data is generated for training and validation, some details of the training process, and present the training result both with a validation dataset and in closed loop simulation in CarMaker.

[Data generation]

To train the AI path planner, a very large number (in the order of millions) of combinations of different lane shapes and placements of static obstacles is randomly generated by independently sampling from a (infinite) set of anchor paths and a (infinite) set of static obstacles with predefined distributions.

The anchor paths set that are sampled from contains two types of lane shapes: a 5-th order polynomial, and an arc preceded by a line segment. The polynomial coefficients are sampled from some uniform distributions with 0 means; the arc angle is uniformly sampled from $[\pi/3, \pi]$; and the path length varies in the range of [80, 250] meters.

Then there are randomly generated 0 to n (n to be 2 in this example) static obstacles along the generated anchor path, each obstacle positioned in the range of [0, 10] meters from some randomly selected anchor point with a random angle, the size of each obstacle (the obstacle is represented as a hexagon) is in the range of [0.2, 2] meters.

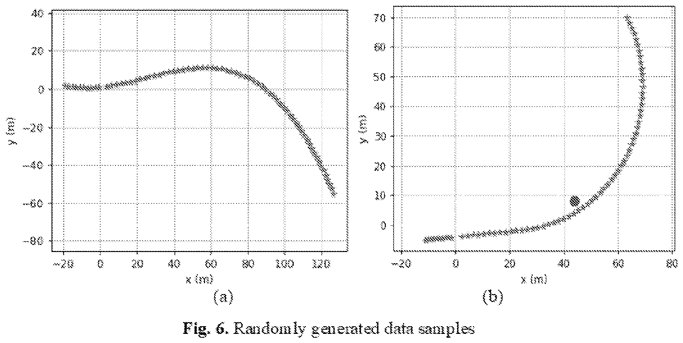

FIG. 6 shows two examples of the generated data. In Fig 6 (a), a polynomial anchor path is generated without any static obstacle nearby, and in FIG. 6 (b) we have a line segment + arc type of anchor path with one static obstacle near the path.

[Training]

The model is implemented in PyTorch, with each encoder hidden size selected to be 1000, and the decoder hidden size 2000; the number of recurrent layers of the GRU is selected to be 3. Since the GRU is used for the encoders and decoder, Adam is chosen as the default optimizer. The learning rate is set to 2e-5 initially and is decreased towards the end of the training.

For each epoch, 5e4 new data samples (we have unlimited data) are generated. The learning process takes about 40 to 100 epochs, meaning the model would have seen 2-5 million data examples to learn to plan a decent path.

[Validation result]

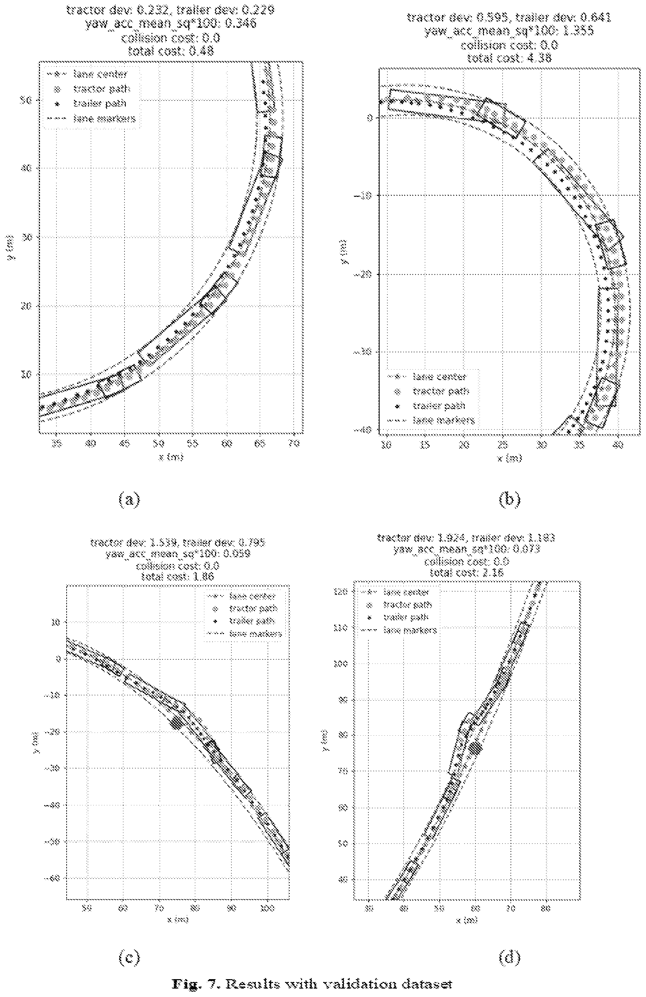

In FIG.7, some examples of the results applying our model to the validation dataset after training are demonstrated.

In FIG. 7 (a) and (b), the model has learned the desired driving behavior to go to the outer side of the lane when turning. FIG. 7 (c) and (d) are examples of the planned path swerving to avoid one static obstacle in the lane, while (e) and (f) are cases with two static obstacles. The planned path in FIG.7 (g) is not affected much by the static obstacle since the obstacle is in a safe distance from the driving lane. Lastly in FIG. 7 (h) a failed example is shown where the planned path collides with the obstacles.

To quantify the model performance in terms of collision avoidance, the model is trained and validated with datasets where each data sample contains exactly one static obstacle. A collision rate of 0.67% is obtained when applying the trained model to the validation dataset (compared to a 48.2% before training). While the performance may improve by tuning some hyperparameters and/or modifying the model architecture, due to the (probabilistic) nature of the deep learning approach, it may be impossible to ever achieve a 0% collision rate, which is a requirement for lower-level motion planners. Nevertheless, by combining the AI path planner with some backup motion planner (such as MPC based), inference speed may be achieved and safety ensured at the same time. One way to complete the AI path planner and guarantee 0% collision rate with static obstacles is, in the rare cases where the AI planned path fails the feasibility check, instead of using the planned path directly, it is only used as a starting point for further optimization by the backup planner.

[Closed-loop simulation]

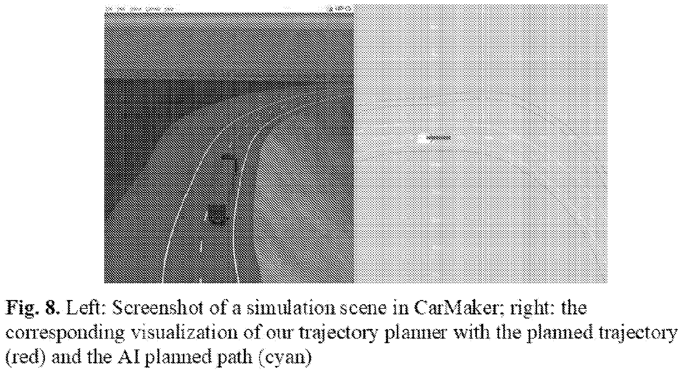

The trained AI path planner has been integrated with a lower-level trajectory planner, which takes the planned path as a reference path and adds velocity information to it. A closed-loop simulation in CarMaker was conducted (for the no obstacle case) and successfully drove the predefined route, proving the model transferability from being trained with randomly generated fake data segments to being applied to (semi) real scenarios. As can be seen in FIG. 8, the planned path tends to go to the outer side of the lane when making the turn.

[Conclusion]

A novel AI path planner is presented that can be trained entirely on randomly generated fake data to plan a feasible path for the tractor trailer combinations with the objective to minimize or otherwise reduce the off-track of the tractor and the trailer swept areas and avoid collisions with static obstacles. To guide the training of the path planner, which is implemented in an encoder-decoder architecture, a differentiable path cost function is constructed to evaluate the cost of a path, which is backpropagated through the network during the training. A "semi-supervised" approach is utilized, as no expert data is needed for the "supervision" of the training. Compared to the supervised approach, the present approach 1) requires no collection of expert driven data; 2) can better the expert driving as it is not imitating the expert, rather, it is trained to minimize or otherwise reduce the "true" cost of a path in an absolute, objective sense, given that the path cost function is properly designed; and 3) makes it possible to teach the network to avoid static obstacles, as the data needed to train the network for that purpose can be easily generated without limitation.

The trained path planning model was validated with a validation dataset and in closed-loop simulation in CarMaker as well. The results showed the model successfully learned the desired driving behavior to go to the outer side of the lane when turning, and it also learned to avoid static obstacles in most cases (> 99%). Due to the probabilistic nature of deep learning approaches, though, a 100% path feasibility can be hard to achieve for the paths generated by the AI path planner. Additional safety mechanisms may be included - e.g., feasibility check and backup motion planner - be integrated with the AI path planner to ensure the safety while leveraging the fast inference speed of the AI path planner.

Future work may include experimenting with new model architectures (e.g., other ways to combine the encodings from different encoders) to further boost the model performance, and considering other features, such as free space, as the model input.

**Claims**

1. A computer-implemented method for training a path planning module of a tractor-trailer combination, the path planning module including a neural network, the neural network receiving input data comprising lane marking information for a target lane of a roadway and information on static obstacles associated with the target lane, the neural network generating output data comprising a reference path for autonomous movement by the tractor-trailer combination along the target lane, the method comprising:

    based on the input data and the output data, determining a cost value associated with the reference path and providing the cost value to the neural network, and
    updating the neural network based upon the cost value to minimize the off-track of the tractor and the trailer swept areas and avoid collisions with static obstacles, wherein the cost value is determined based on a set of criteria including collision avoidance with static obstacles and deviation of a tractor and a trailer of the tractor-trailer combination from the reference path, wherein a path of the trailer is inferred from the path of the tractor based on a kinematic model associated with the tractor-trailer combination.

2. The method of claim 1, wherein the neural network comprises an encoder-decoder architecture in which an encoder portion and a decoder portion receive the input data and the decoder portion generates the output data, and updating the neural network comprises updating parameters of the encoder portion and the decoder portion by backpropagating the cost value through the encoder and decoder portions to reduce the cost value.

3. The method of claim 1, wherein the cost value is determined based on a set of criteria including collision avoidance data relative to at least one static obstacle in or near the target lane.

4. The method of claim 1, wherein the cost value is represented as a linear combination of a plurality of individual costs.

5. The method of claim 1, wherein the input data comprises randomly generated data without expert driving data.

6. An autonomous driving system for a tractor-trailer combination, comprising:

    a path planner module which is adapted to generate a reference path based on input data corresponding to a roadway and data corresponding to at least one static obstacle disposed along the roadway with the objective to minimize the off-track of the tractor and the trailer swept areas and avoid collisions with static obstacles, the path planner module comprising a neural network, the neural network receiving the input and generating output data comprising a reference path for autonomous movement by the tractor-trailer combination along a target lane of the roadway; and
    a path cost function module coupled to the neural network and which is adapted to receive the input data and the output data, to determine a cost value associated with the reference path and to provide the cost value to the neural network for updating the neural network, wherein the cost value is determined based on a set of criteria including collision avoidance with static obstacles and deviation of a tractor and a trailer of the tractor-trailer combination from the reference path, wherein a path of the trailer is inferred from the path of the tractor based on a kinematic model associated with the tractor-trailer combination, the path cost function module being used to train the neural network during a training phase thereof.

**Patentansprüche**

1. Computerimplementiertes Verfahren zum Trainieren eines Wegplanungsmoduls einer Traktor-Anhänger-Kombination, wobei das Wegplanungsmodul ein neuronales Netz einschließt, wobei das neuronale Netz Eingangsdaten, umfassend Fahrbahnmarkierungsinformationen für eine Zielfahrbahn einer Straße und Informationen über statische Hindernisse, die mit der Zielfahrbahn verknüpft sind, empfängt, wobei das neuronale Netz Ausgangsdaten, umfassend einen Referenzweg für autonome Bewegung durch die Traktor-Anhänger-Kombination entlang der Zielfahrbahn, erzeugt, wobei das Verfahren Folgendes umfasst:

basierend auf den Eingangsdaten und den Ausgangsdaten, Bestimmen eines Kostenwerts, der mit dem Referenzweg verknüpft ist, und Bereitstellen des Kostenwerts für das neuronale Netz, und

Aktualisieren des neuronalen Netzes basierend auf dem Kostenwert, um die Abweichung der Kehrbereiche des Traktor und des Anhängers zu minimieren und Kollisionen mit statischen Hindernissen zu vermeiden, wobei der Kostenwert basierend auf einer Reihe von Kriterien bestimmt wird, einschließlich Kollisionsvermeidung mit statischen Hindernissen und Abweichung von Traktor und Anhänger der Traktor-Anhänger-Kombination von dem Referenzweg, wobei ein Weg des Anhängers aus dem Weg des Traktors basierend auf einem mit der Traktor-Anhänger-Kombination verknüpften kinematischen Modell abgeleitet wird.

2. Verfahren nach Anspruch 1, wobei das neuronale Netz eine Encoder-Decoder-Architektur umfasst, bei der ein Encoder-Abschnitt und ein Decoder-Abschnitt die Eingangsdaten empfangen und der Decoder-Abschnitt die Ausgangsdaten erzeugt, und wobei das Aktualisieren des neuronalen Netzes ein Aktualisieren von Parametern des Encoder-Abschnitts und des Decoder-Abschnitts durch Rückpropagieren des Kostenwerts durch den Encoder- und den Decoder-Abschnitt umfasst, um den Kostenwert zu reduzieren.

3. Verfahren nach Anspruch 1, wobei der Kostenwert basierend auf einer Reihe von Kriterien, einschließlich Kollisionsvermeidungsdaten in Zusammenhang mit mindestens einem statischen Hindernis in oder in der Nähe der Zielfahrbahn, bestimmt wird.

4. Verfahren nach Anspruch 1, wobei der Kostenwert als lineare Kombination einer Vielzahl von Einzelkosten dargestellt ist.

5. Verfahren nach Anspruch 1, wobei die Eingangsdaten zufällig erzeugte Daten ohne Expertenfahrdaten umfassen.

6. Autonomes Fahrsystem für eine Traktor-Anhänger-Kombination, umfassend:

ein Wegplanungsmodul, das angepasst ist, um einen Referenzweg basierend auf Eingangsdaten, die einer Straße entsprechen, und Daten, die mindestens einem entlang der Straße angeordneten statischen Hindernis entsprechen, zu erzeugen, mit dem Ziel, die Abweichung der Kehrbereiche des Traktors und des Anhängers zu minimieren und Kollisionen mit statischen Hindernissen zu vermeiden, wobei das Wegplanungsmodul ein neuronales Netz umfasst, wobei das neuronale Netz den Eingang empfängt und Ausgangsdaten erzeugt, die einen Referenzweg für autonome Bewegung der Traktor-Anhänger-Kombination entlang einer Zielfahrbahn der Straße umfassen; und

ein Wegkostenfunktionsmodul, das mit dem neuronalen Netz verbunden ist und dazu angepasst ist, die Eingangsdaten und die Ausgangsdaten zu empfangen, einen mit dem Referenzweg verknüpften Kostenwert zu bestimmen und den Kostenwert dem neuronalen Netz zum Aktualisieren des neuronalen Netzes bereitzustellen, wobei der Kostenwert basierend auf einer Reihe von Kriterien, einschließlich Kollisionsvermeidung mit statischen Hindernissen und Abweichung eines Traktors und eines Anhängers der Traktor-Anhänger-Kombination von dem Referenzweg, bestimmt wird, wobei ein Weg des Anhängers aus dem Weg des Traktors basierend auf einem mit der Traktor-Anhänger-Kombination verknüpften kinematischen Modell abgeleitet wird, wobei das Wegkostenfunktionsmodul dazu verwendet wird, das neuronale Netz während einer Trainingsphase davon zu trainieren.

**Revendications**

1. Procédé mis en œuvre par ordinateur pour entraîner un module de planification de trajet pour un ensemble semi-remorque, le module de planification de trajet comportant un réseau neuronal, le réseau neuronal recevant des données d'entrée comprenant des informations de marquage au sol pour une voie cible d'une chaussée et des informations sur les obstacles statiques associés à la voie cible, le réseau neuronal générant des données de sortie comprenant un trajet de référence pour le déplacement autonome de l'ensemble semi-remorque le long de la voie cible, le procédé comprenant :

sur la base des données d'entrée et des données de sortie, la détermination d'une valeur de coût associée au trajet de référence et la fourniture de la valeur de coût au réseau neuronal, et

la mise à jour du réseau neuronal sur la base de la valeur de coût afin de minimiser les écarts de trajet du semi et les zones balayées par la remorque et d'éviter les collisions avec les obstacles statiques, dans lequel la valeur de coût est déterminée sur la base d'un ensemble de critères comportant l'évitement de collisions avec les obstacles statiques et l'écart d'un semi et d'une remorque de l'ensemble semi-remorque par rapport au trajet de référence, dans lequel un trajet de la remorque est déduit du trajet du semi sur la base d'un modèle cinématique associé à l'ensemble semi-remorque.

2. Procédé selon la revendication 1, dans lequel le réseau neuronal comprend une architecture encodeur-décodeur dans laquelle une partie encodeur et une partie décodeur reçoivent les données d'entrée et la partie décodeur génère les données de sortie, et la mise à jour du réseau neuronal comprend la mise à jour des paramètres de la partie encodeur et de la partie décodeur en rétropropageant la valeur de coût à travers les parties encodeur et décodeur pour réduire la valeur de coût.

3. Procédé selon la revendication 1, dans lequel la valeur de coût est déterminée sur la base d'un ensemble de critères comportant des données d'évitement de collision relatives à au moins un obstacle statique dans ou près de la voie cible.

4. Procédé selon la revendication 1, dans lequel la valeur de coût est représentée comme une combinaison linéaire d'une pluralité de coûts individuels.

5. Procédé selon la revendication 1, dans lequel les données d'entrée comprennent des données générées aléatoirement sans données de conduite expertes.

6. Système de conduite autonome pour un ensemble semi-remorque, comprenant :

un module de planification de trajet qui est conçu pour générer un trajet de référence sur la base de données d'entrée correspondant à une chaussée et de données correspondant à au moins un obstacle statique disposé le long de la chaussée, dans le but de minimiser les écarts de trajet du semi et des zones balayées par la remorque et d'éviter les collisions avec des obstacles statiques, le module de planification de trajet comprenant un réseau neuronal, le réseau neuronal recevant l'entrée et générant des données de sortie comprenant un trajet de référence pour le déplacement autonome de l'ensemble semi-remorque le long d'une voie cible de la chaussée ; et

un module de fonction de coût de trajet, couplé au réseau neuronal et qui est conçu pour recevoir les données d'entrée et les données de sortie, pour déterminer une valeur de coût associée au trajet de référence et pour fournir la valeur de coût au réseau neuronal afin de mettre à jour le réseau neuronal, dans lequel la valeur de coût est déterminée sur la base d'un ensemble de critères comportant l'évitement des collisions avec des obstacles statiques et l'écart d'un semi et d'une remorque de l'ensemble semi-remorque par rapport au trajet de référence, dans lequel un trajet de la remorque est déduit du trajet du semi sur la base d'un modèle cinématique associé à l'ensemble semi-remorque, le module de fonction de coût de trajet étant utilisé pour entraîner le réseau neuronal lors de sa phase d'entraînement.

**Fig. 1.** A semi-truck (tractor-trailer system)

Fig. 2. Illustration of input features and the output path of the network.

**Fig. 3.** The encoder-decoder architecture for the AI path planner

Fig. 4. Training pipelines / concepts for the supervised approach (a) and the semi-supervised approach (b)

**Fig. 5.** Truck-trailer tricycle model.

**Fig. 6.** Randomly generated data samples

Fig. 7. Results with validation dataset

**Fig. 8.** Left: Screenshot of a simulation scene in CarMaker; right: the corresponding visualization of our trajectory planner with the planned trajectory (red) and the AI planned path (cyan)

Fig. 9A The encoder portion of the neural network

e

Fig. 9B The decoder portion of the neural network

Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **INKYUNG SUNG et al.** On the training of a neural network for online path planning with offline path planning algorithms. *INTERNATIONAL JOURNAL OF INFORMATION MANAGEMENT*, 05 June 2020, vol. 57
- **PENG LI et al.** Human-like motion planning of autonomous vehicle based on probabilistic trajectory prediction. *APPLIED SOFT COMPUTING*, 29 January 2022, vol. 118

- Optimization-based Maneuver Planning for a Tractor-Trailer Vehicle in Complex Environments using Safe Travel Corridors. **HANGJIE CEN et al.** 2021 2021 IEEE INTELLIGENT VEHICLES SYMPOSIUM (IV). IEEE, 11 July 2021